# FASCICULE DE BREVET EUROPEEN

(11) **EP 3 331 832 B1**
(45) Date de publication et mention de la délivrance du brevet: **07.10.2026**
(21) Numéro de dépôt: 16760535.1
(22) Date de dépôt: 05.08.2016
(51) Int. Cl.: C03C 17/34, G02B 1/111

(54) **ARTICLE À PROPRIÉTÉS THERMOMÉCANIQUES AMÉLIORÉES COMPORTANT UNE COUCHE DE NATURE ORGANIQUE-INORGANIQUE**
ARTIKEL MIT VERBESSERTEN THERMOMECHANISCHEN EIGENSCHAFTEN MIT EINER ORGANISCH-ANORGANISCHEN SCHICHT
ITEM HAVING IMPROVED THERMOMECHANICAL PROPERTIES, COMPRISING AN ORGANIC-INORGANIC LAYER

(30) Priorité: 05.08.2015 FR 1557560
(43) Date de publication de la demande: 13.06.2018
(73) Titulaire: Essilor International, 94220 Charenton-le-Pont (FR)
(72) Inventeur: CHIAROTTO, Sébastien, 94227 Charenton le Pont cedex (FR); SCHERER, Karin, 94227 Charenton le Pont cedex (FR)
(74) Mandataire: Jacobacci & Partners France
(86) Numéro de dépôt international: PCT/FR2016/052042
(87) Numéro de publication internationale: WO 2017/021670

(56) Documents cités:
- EP-A2- 1 306 695
- EP-A2- 1 324 078
- WO-A1-2009/004222

## Description

La présente invention concerne d'une manière générale un article, de préférence un article d'optique, notamment une lentille ophtalmique, possédant un revêtement interférentiel comportant au moins une couche de nature organique-inorganique, de préférence un revêtement antireflet ou un filtre optique, dont les propriétés thermomécaniques ont été améliorées.

Il est connu de revêtir des articles d'optique tels que des lentilles ophtalmiques ou des écrans de revêtements interférentiels, notamment antireflets, qui sont généralement formés d'un empilement multicouche de matériaux minéraux diélectriques tels que SiO, SiO₂, Si₃N₄, TiO₂, ZrO₂, Al₂O₃, MgF₂ ou Ta₂O₅.

Un des problèmes rencontrés pour tous les types de revêtements interférentiels minéraux, généralement déposés par évaporation sous vide ou par pulvérisation, est leur grande fragilité d'un point de vue mécanique due principalement à leur nature minérale. Ces revêtements possèdent des contraintes plus ou moins importantes et peuvent difficilement être soumis à une déformation ou une dilatation importante, car la contrainte subie se traduit souvent par un problème d'adhérence et/ou un craquèlement qui se propage sur l'ensemble de la surface du revêtement, le rendant généralement inutilisable, et ceci d'autant plus que les couches sont épaisses.

Ainsi, lors du taillage et du montage d'un verre chez l'opticien, le verre subit des déformations mécaniques qui peuvent provoquer des fissures dans les revêtements interférentiels, en particulier lorsque l'opération n'est pas conduite avec soin. De façon similaire, des sollicitations en température (chauffage de la monture) peuvent provoquer des fissures dans le revêtement interférentiel. Selon le nombre et la taille des fissures, celles-ci peuvent gêner la vue pour le porteur et empêcher la commercialisation du verre. En outre, pendant le port de verres organiques traités, des rayures peuvent apparaître. Dans les revêtements interférentiels minéraux, certaines rayures entraînent des fissurations, rendant les rayures plus visibles à cause d'une diffusion de lumière.

La fragilité d'un revêtement interférentiel d'un point de vue mécanique est d'autant plus grande que celui-ci est épais et/ou possède un nombre de couches élevé, une épaisseur élevée de revêtement interférentiel pouvant résulter de l'utilisation de couches épaisses ou d'un grand nombre de couches.

Or, la conception de filtres optiques efficaces nécessite généralement des empilements possédant ces caractéristiques. Ces structures épaisses et/ou complexes conduisent généralement à des performances thermomécaniques et d'abrasion faibles dues à la nature des couches inorganiques déposées, fragiles d'un point de vue thermomécanique.

EP1306695-A2 et EP1324078-A2 divulguent des lentilles ayant un substrat organique avec une surface principale revêtue d'une sous-couche de nature organique-inorganique et d'un revêtement interférentiel.

La demande WO 2013/098531, au nom du demandeur, décrit un article ayant des performances thermomécaniques améliorées, comprenant un substrat ayant au moins une surface principale revêtue d'un revêtement interférentiel multicouche, ledit revêtement comprenant une couche A non formée à partir de composés précurseurs inorganiques ayant un indice de réfraction inférieur ou égal à 1,55, qui constitue :
o soit la couche externe du revêtement interférentiel,
o soit une couche intermédiaire, directement en contact avec la couche externe du revêtement interférentiel, cette couche externe du revêtement interférentiel étant dans ce second cas une couche additionnelle ayant un indice de réfraction inférieur ou égal à 1,55, et ladite couche A ayant été obtenue par dépôt, sous faisceau d'ions, d'espèces activées issues d'au moins un composé précurseur C sous forme gazeuse de nature silico-organique tel que l'octaméthylcyclotétrasiloxane (OMCTS).

La demande WO 2014/199103, au nom du demandeur, décrit un revêtement interférentiel multicouche obtenu selon une technologie similaire, dont la couche externe est une couche A obtenue par dépôt, sous faisceau d'ions, d'espèces activées issues d'au moins un composé précurseur sous forme gazeuse de nature silico-organique tel que le 2,4,6,8-tétraméthylcyclotétrasiloxane (TMCTS).

Ces deux dernières demandes ne visent cependant pas la préparation de revêtements interférentiels épais et/ou possédant un grand nombre de couches.

Un but de l'invention est de proposer un moyen efficace pour réduire de façon satisfaisante la fragilité inhérente des revêtements interférentiels minéraux épais (possédant par exemple des couches épaisses) et/ou possédant un grand nombre de couches et augmenter significativement la température ou la contrainte au-delà de laquelle la dilatation ou la déformation du revêtement provoque son craquèlement, en vue notamment de réaliser des empilement complexes tels que ceux nécessités par les filtres optiques.

L'invention vise en particulier des articles possédant une température critique améliorée, c'est à dire, présentant une bonne résistance à la craquelure lorsqu'ils sont soumis à une élévation de température. Un autre objectif de l'invention est de disposer d'un procédé de fabrication d'un article équipé d'un revêtement interférentiel qui soit simple, facile à mettre en œuvre et reproductible.

Ces problèmes sont résolus selon l'invention en modifiant la nature d'une ou plusieurs couches inorganiques du revêtement interférentiel, remplacée(s) par une ou des couches de nature organique-inorganique, c'est-à-dire des couches à base de composés carbonés et métalliques ou métalloïdiques. Selon l'invention, ces matériaux sont utilisés à la place des matériaux inorganiques traditionnels tels que le dioxyde de titane, de zirconium ou la silice dans les revêtements interférentiels épais et/ou possédant un grand nombre de couches.

Les buts fixés sont donc atteints selon l'invention décrit dans la revendication 1.

Dans la présente demande, lorsqu'un article comprend un ou plusieurs revêtements à sa surface, l'expression "déposer une couche ou un revêtement sur l'article" signifie qu'une couche ou un revêtement est déposé sur la surface à découvert (exposée) du revêtement externe de l'article, c'est-à-dire son revêtement le plus éloigné du substrat.

Un revêtement qui est "sur" un substrat ou qui a été déposé "sur" un substrat est défini comme un revêtement qui (i) est positionné au-dessus du substrat, (ii) n'est pas nécessairement en contact avec le substrat (bien que préférentiellement, il le soit), c'est-à-dire qu'un ou plusieurs revêtements intermédiaires peuvent être disposés entre le substrat et le revêtement en question, et (iii) ne recouvre pas nécessairement le substrat complètement (bien que préférentiellement, il le recouvre). Lorsque "une couche 1 est localisée sous une couche 2", on comprendra que la couche 2 est plus éloignée du substrat que la couche 1.

L'article préparé selon l'invention comprend un substrat, de préférence transparent, ayant des faces principales avant et arrière, l'une au moins desdites faces principales comportant un revêtement interférentiel comprenant au moins une couche organique-inorganique, de préférence les deux faces principales. Une couche organique-inorganique est définie comme étant une couche comprenant des atomes de carbone, d'un métal ou metalloïde et de préférence d'oxygène. Elle est selon l'invention obtenue par dépôt sous vide.

Par face arrière (généralement concave) du substrat, on entend la face qui, lors de l'utilisation de l'article, est la plus proche de l'œil du porteur. Inversement, par face avant (généralement convexe) du substrat, on entend la face qui, lors de l'utilisation de l'article, est la plus éloignée de l'œil du porteur.

Bien que l'article selon l'invention puisse être un article quelconque, tel qu'un écran, un vitrage, des lunettes de protection utilisables notamment en environnement de travail, un miroir, ou un article utilisé en électronique, il constitue de préférence un article d'optique, utilisable notamment dans le domaine ophtalmique ou celui de l'optique de précision, par exemple un filtre optique, une lentille optique, une lentille ophtalmique, correctrice ou non, pour lunettes, ou une ébauche de lentille optique ou ophtalmique telle qu'une lentille optique semi-finie, en particulier un verre de lunettes. La lentille peut être une lentille polarisée, colorée, une lentille photochrome ou électrochrome.

Le substrat de l'article selon l'invention est de préférence un verre organique, par exemple en matière plastique thermoplastique ou thermodurcissable. Ce substrat peut être choisi parmi les substrats cités dans la demande WO 2008/062142, par exemple un substrat obtenu par (co)polymérisation du bis allyl carbonate du diéthylèneglycol, un substrat en poly(thio)uréthane, un substrat à base de polyépisulfure ou un substrat en polycarbonate de bis(phénol A) (thermoplastique), noté PC, ou un substrat en PMMA (polyméthacrylate de méthyle).

Le revêtement interférentiel selon l'invention peut être formé sur au moins l'une des faces principales d'un substrat nu, c'est-à-dire non revêtu, ou sur au moins l'une des faces principales d'un substrat déjà revêtu d'un ou plusieurs revêtements fonctionnels.

Avant le dépôt du revêtement interférentiel sur le substrat éventuellement revêtu, par exemple d'un revêtement anti-abrasion et/ou anti-rayure, il est courant de soumettre la surface dudit substrat, éventuellement revêtue, à un traitement d'activation physique ou chimique, destiné à augmenter l'adhésion de ce revêtement. Ce prétraitement est généralement conduit sous vide. Il peut s'agir d'un bombardement avec des espèces énergétiques et/ou réactives, par exemple un faisceau d'ions ("Ion Pre-Cleaning" ou "IPC") ou un faisceau d'électrons, d'un traitement par décharge corona, par effluvage, d'un traitement UV, ou d'un traitement par plasma sous vide. Il peut également s'agir d'un traitement de surface acide ou basique et/ou par solvants (eau ou solvant organique). Ces traitements sont décrits plus en détail dans la demande WO 2014/199103.

L'article selon l'invention comporte un revêtement interférentiel comprenant au moins une couche organique-inorganique, qui constitue soit une couche de bas indice de réfraction du revêtement interférentiel multicouche, notamment antireflet, soit une couche de haut indice de réfraction.

Dans la présente demande, une couche, notamment une couche du revêtement interférentiel, est dite couche de haut indice de réfraction lorsque son indice de réfraction est supérieur à 1,65, de préférence supérieur ou égal à 1,70, mieux supérieur ou égal à 1,8 et encore mieux supérieur ou égal à 2,0, et une couche est dite couche de bas indice de réfraction lorsque son indice de réfraction est inférieur ou égal à 1,65, de préférence inférieur ou égal à 1,55, mieux inférieur ou égal à 1,50 et encore mieux inférieur ou égal à 1,45.

Le revêtement interférentiel peut être tout revêtement interférentiel classiquement utilisé dans le domaine de l'optique, en particulier de l'optique ophtalmique, excepté le fait qu'il comporte au moins une couche ayant un indice de réfraction supérieur à 1,65 et au moins une couche ayant un indice de réfraction inférieur ou égal à 1,65, que l'une au moins de ses couches est une couche organique-inorganique ayant été déposée sous vide, et qu'il vérifie les conditions d'épaisseur et/ou de nombre de couches mentionnées plus haut.

Le revêtement interférentiel peut être, sans limitation, un filtre optique, un revêtement antireflet, un revêtement réfléchissant (miroir), de préférence un filtre optique sélectif et/ou un revêtement antireflet, notamment un filtre infrarouge, un filtre ultraviolet (de préférence un revêtement antireflet anti-UV), de préférence encore un filtre optique sélectif comportant une zone de filtration dans le domaine du bleu (400-500 nm). Un tel filtre coupe au moins partiellement la lumière bleue, nocive pour l'œil du porteur.

Un revêtement antireflet se définit comme un revêtement, déposé à la surface d'un article, qui améliore les propriétés anti-réfléchissantes de l'article final. Il permet de réduire la réflexion de la lumière à l'interface article-air sur une portion relativement large du spectre visible.

Comme cela est bien connu, les revêtements interférentiels, de préférence les revêtements antireflet, comprennent classiquement un empilement de matériaux diélectriques formant des couches de haut indice de réfraction (HI) et des couches de bas indice de réfraction (BI).

Les couches HI sont des couches de haut indice de réfraction classiques, bien connues dans la technique. Elles comprennent généralement un ou plusieurs oxydes minéraux tels que, sans limitation, la zircone (ZrO₂), le dioxyde de titane (TiO₂), le pentoxyde de tantale (Ta₂O₅), l'oxyde de néodyme (Nd₂O₅), l'oxyde d'hafnium (HfO₂), l'oxyde de praséodyme (Pr₂O₃), le titanate de praséodyme (PrTiO₃), La₂O₃, Nb₂O₅, Y₂O₃, l'oxyde d'indium In₂O₃, ou l'oxyde d'étain SnO₂. Les matériaux préférés sont TiO₂, Ta₂O₅, PrTiO₃, ZrO₂, SnO₂, In₂O₃ et leurs mélanges.

Les couches BI sont également bien connues et peuvent comprendre, sans limitation, SiO₂, MgF₂, ZrF₄, de l'alumine (Al₂O₃) en faible proportion, AlF₃, et leurs mélanges, de préférence SiO₂. On peut également utiliser des couches SiOF (SiO₂ dopée au fluor). Idéalement, le revêtement interférentiel de l'invention ne comprend aucune couche comprenant un mélange de silice et d'alumine.

L'épaisseur totale du revêtement interférentiel est généralement supérieure à 100 nm, de préférence supérieure à l'une des valeurs suivantes : 450 nm, 500 nm, 600 nm, 700 nm, 800 nm, 900 nm, 1 micromètre, 1,1 micromètre, 1,2 micromètre.

Préférentiellement, l'épaisseur totale du revêtement interférentiel est inférieure ou égale à 2 micromètres, mieux inférieure ou égale à 1,5 µm. Dans un mode de réalisation, l'épaisseur totale du revêtement interférentiel est inférieure ou égale à 450 nm. Dans ce cas, le revêtement interférentiel présente nécessairement un nombre de couches supérieur ou égal à 8.

Le procédé de l'invention est particulièrement avantageux pour le dépôt de revêtements interférentiels multicouches épais ou possédant des couches épaisses ou un nombre de couches élevé. En effet, les empilements interférentiels de ce type sont naturellement plus fragiles d'un point de vue mécanique. Le fait qu'un revêtement interférentiel multicouche épais ou possédant des couches épaisses ou un nombre de couches élevé comporte au moins une couche organique-inorganique selon l'invention lui permet de disposer de propriétés thermomécaniques et élastiques supérieures, en particulier de propriétés de déformation améliorées.

De préférence encore, le revêtement interférentiel, qui est de préférence un revêtement antireflet, comprend au moins deux couches de bas indice de réfraction (BI) et au moins deux couches de haut indice de réfraction (HI). Préférentiellement, le nombre total de couches du revêtement interférentiel est supérieur ou égal à 8, mieux supérieur ou égal à 9, encore mieux supérieur ou égal à 10. Dans certains modes de réalisation, le nombre total de couches du revêtement interférentiel est inférieur à 8, voire inférieur ou égal à 6, mais dans ce cas, le revêtement interférentiel présente nécessairement une épaisseur supérieure ou égale à 450 nm.

De préférence, le revêtement interférentiel présente simultanément une épaisseur supérieure ou égale à 450 nm, 500 nm, 600 nm, 700 nm, 800 nm, 900 nm, 1 micromètre, 1,1 micromètre ou 1,2 micromètre et un nombre de couches supérieur ou égal à 8, 9 ou 10.

Il n'est pas nécessaire que les couches HI et BI soient alternées dans le revêtement interférentiel, bien qu'elles puissent l'être selon un mode de réalisation de l'invention. Deux couches HI (ou plus) peuvent être déposées l'une sur l'autre, tout comme deux couches BI (ou plus) peuvent être déposées l'une sur l'autre.

La couche organique-inorganique du revêtement interférentiel comprend de préférence des atomes de carbone, d'oxygène, et d'un métal ou métalloïde choisi parmi le silicium, le zirconium, le titane et le niobium, de préférence le silicium. Dans ce dernier cas, elle constitue une couche silico-organique. Elle est préférentiellement obtenue par dépôt d'au moins un composé organosilicié, sous vide. Le dépôt de la couche organique-inorganique est de préférence assisté par une source d'ions. L'assistance par une source d'ions est préférentiellement un bombardement ionique, généralement effectué par un canon à ions. Une couche formée à partir d'un composé organosilicié constitue une couche de nature organique-inorganique dans la mesure où le procédé de dépôt est tel que la couche déposée comprend des atomes de carbone, d'oxygène, et d'un métal ou métalloïde.

Dans la présente demande, les oxydes de métalloïdes sont considérés comme étant des oxydes métalliques, et le terme générique "métal" désigne également les métalloïdes.

Selon un mode de réalisation, toutes les couches de bas indice de réfraction du revêtement interférentiel sont des couches organiques-inorganiques, identiques ou différentes. Dans un autre mode de réalisation, la couche externe du revêtement interférentiel multicouche, c'est-à-dire la couche du revêtement interférentiel la plus éloignée du substrat dans l'ordre d'empilement, est une couche organique-inorganique de bas indice de réfraction. Une couche organique-inorganique de bas indice de réfraction (présentant un indice de réfraction inférieur ou égal à 1,65), notée couche A, est de préférence directement déposée sur une couche de haut indice de réfraction.

De préférence, la couche externe du revêtement interférentiel est une couche de bas indice de réfraction qui se trouve préférentiellement directement en contact avec une couche sous-jacente de haut indice de réfraction. Selon un autre mode de réalisation, toutes les couches de haut indice de réfraction du revêtement interférentiel sont des couches organiques-inorganiques, identiques ou différentes. Dans certains articles selon l'invention, la première couche du revêtement interférentiel, dans l'ordre de dépôt, est une couche organique-inorganique de haut indice de réfraction. Une couche organique-inorganique de haut indice de réfraction selon l'invention (présentant un indice de réfraction supérieur à 1,65) est notée couche B.

Selon un mode de réalisation préféré, toutes les couches du revêtement interférentiel sont des couches organiques-inorganiques. Dans ce cas, le revêtement interférentiel peut être composé d'une alternance de couches A et B selon l'invention en contact direct les unes avec les autres.

Selon un autre mode de réalisation, toutes les couches du revêtement interférentiel comprennent au moins un composé organosilicié qui peut être choisi parmi les composés organosiliciés décrits plus bas.

Selon le mode de réalisation préféré de l'invention, la couche organique-inorganique est une couche de bas indice de réfraction (présentant un indice de réfraction inférieur ou égal à 1,65, de préférence inférieur ou égal à 1,55), notée couche A, qui est préférentiellement obtenue par dépôt sous vide selon le cas, d'une ou deux catégories de précurseurs sous forme gazeuse, notamment par évaporation ou co-évaporation : au moins un composé A organosilicié et optionnellement au moins un composé inorganique, qui est préférentiellement un oxyde métallique. La description qui suit fera généralement référence à l'oxyde métallique précurseur de la couche A mais sera également applicable au cas où le composé inorganique précurseur n'est pas un oxyde métallique. Ce dépôt est préférentiellement assisté par une source d'ions (notamment un faisceau d'ions), idéalement sous bombardement ionique. Cette technique de dépôt sous faisceau d'ions permet d'obtenir des espèces activées issues d'au moins un composé A organosilicié et d'au moins un oxyde métallique (lorsqu'il est présent), sous forme gazeuse.

Le composé inorganique précurseur optionnel de la couche A est de préférence un oxyde métallique de bas indice de réfraction, expression qui a été définie précédemment. Il peut être choisi parmi les oxydes métalliques et leurs mélanges convenant pour les couches de bas indice de réfraction décrites précédemment, ou parmi des oxydes métalliques sous-stœchiométriques tels qu'un oxyde de silicium sous-stœchiométrique, de formule SiOx, avec x < 2, x variant de préférence de 0,2 à 1,2. Il s'agit de préférence des oxydes SiO₂ ou SiO ou de leurs mélanges, idéalement SiO₂.

L'indice de réfraction de la couche A est inférieur ou égal à 1,65, de préférence inférieur ou égal à 1,50. Selon des modes de réalisation de l'invention, l'indice de réfraction de la couche A est supérieur ou égal à 1,45, mieux supérieur à 1,47, mieux encore supérieur ou égal à 1,48 et idéalement supérieur ou égal à 1,49.

Lorsqu'une couche inorganique de haut indice de réfraction (qui contient de préférence au moins un oxyde métallique ayant un indice de réfraction supérieur ou égal à 1,8) doit être déposée sur une couche A, il est préférable d'intercaler entre ces deux couches une couche notée couche C comprenant un oxyde de silicium et ayant une épaisseur inférieure ou égale à 15 nm, afin d'obtenir une meilleure adhésion à l'interface. L'oxyde de silicium de cette couche peut être choisi parmi la silice (SiO₂) et les oxydes de silicium sous-stœchiométriques, de formule SiOx, avec x < 2, x variant de préférence de 0,2 à 1,2. Il s'agit de préférence des oxydes SiO₂ ou SiO ou de leurs mélanges, idéalement SiO₂. De préférence, la couche C, déposée sur la couche A et en contact direct avec elle, contient au moins 50 % en masse d'oxydes de silicium (par exemple de silice), par rapport à la masse totale de la couche C, mieux 75 % ou plus et encore mieux 90 % ou plus, idéalement 95 % ou plus. Selon un mode de réalisation préféré, la couche C constitue une couche formée exclusivement d'oxydes de silicium. La couche C, lorsqu'elle est présente, est une fine couche ayant une épaisseur préférentiellement inférieure ou égale à 10 nm, qui varie de préférence de 2 à 10 nm, mieux de 5 à 10 nm. De préférence, la teneur en composés organiques ou composés organosiliciés dans la couche C est inférieure à 10 % en masse par rapport à la masse de la couche C, mieux inférieure à 5 % et encore mieux inférieure à 1 %.

Selon un mode de réalisation de l'invention, le revêtement interférentiel comprend une sous-couche. Elle constitue dans ce cas généralement la première couche de ce revêtement interférentiel dans l'ordre de dépôt des couches, c'est-à-dire la couche du revêtement interférentiel qui est au contact du substrat nu ou revêtu.

Par sous-couche du revêtement interférentiel, on entend un revêtement d'épaisseur relativement importante, utilisé dans le but d'améliorer la résistance à l'abrasion et/ou à la rayure dudit revêtement et/ou de promouvoir son adhésion au substrat. La sous-couche selon l'invention peut être choisie parmi les sous-couches décrites dans la demande WO 2010/109154. La sous-couche peut également être une couche de nature organique-inorganique ou comprendre une couche de nature organique-inorganique. Dans ce cas, ladite couche de nature organique-inorganique comprise dans ou constituant la sous-couche est de préférence une couche A.

Préférentiellement, la sous-couche a une épaisseur de 100 à 500 nm. Elle est préférentiellement de nature exclusivement minérale/inorganique et est préférentiellement constituée de silice SiO₂.

Dans un mode de réalisation, la couche organique-inorganique est une couche de haut indice de réfraction, notée couche B, qui est préférentiellement obtenue par dépôt sous vide d'au moins un oxyde métallique de haut indice de réfraction et d'au moins un composé B organosilicié. Ce dépôt est préférentiellement assisté par une source d'ions.

L'oxyde métallique précurseur de la couche B est un oxyde métallique de haut indice de réfraction, expression qui a été définie précédemment. Il peut être choisi parmi les oxydes métalliques et leurs mélanges convenant pour les couches de haut indice de réfraction décrites précédemment, ou parmi des oxydes métalliques sous-stœchiométriques tels qu'un oxyde de titane ou de zirconium sous-stœchiométrique, de formules respectives TiOx et ZrOx, avec x < 2, x variant de préférence de 0,2 à 1,2.

Il s'agit de préférence de l'oxyde TiO₂ ou d'un oxyde de titane sous-stœchiométrique tel que les composés TiO, Ti₂O₃ ou Ti₃O₅, ou bien d'un oxyde d'hafnium.

L'utilisation d'oxyde de titane est avantageuse en raison de l'indice de réfraction élevé de cet oxyde métallique. L'indice de réfraction du TiO₂ sous forme rutile est effectivement de l'ordre de 2,65 à 550 nm. Ainsi, la couche B peut conserver un indice de réfraction élevé (≥ 1,8) même si l'oxyde de titane est mélangé avec un composé B organosilicié d'indice de réfraction plus faible.

De préférence, l'indice de réfraction de la couche B est supérieur ou égal à l'une au moins des valeurs suivantes : 1,7, 1,8, 1,9, 2,0, 2,05 et idéalement supérieur ou égal à 2,1.

La couche B de l'article final contient de préférence au moins un oxyde métallique ayant un indice de réfraction supérieur ou égal à 1,8. Cet oxyde métallique peut être le même que l'oxyde métallique précurseur utilisé pour former la couche B et décrit ci-dessus ou être différent de celui-ci, dans la mesure où le processus de dépôt de la couche B peut induire une modification de l'oxyde métallique précurseur telle qu'une oxydation. Il s'agit de préférence d'un oxyde de titane, en particulier le composé TiO₂.

La couche B est formée d'un matériau obtenu par dépôt sous vide et de préférence sous l'assistance d'une source d'ions (notamment un faisceau d'ions), préférentiellement sous bombardement ionique, de deux catégories de précurseurs sous forme gazeuse, notamment par co-évaporation : au moins un oxyde métallique et au moins un composé B organosilicié. Cette technique de dépôt sous faisceau d'ions permet d'obtenir des espèces activées issues d'au moins un composé B organosilicié et d'au moins un oxyde métallique, sous forme gazeuse.

L'article de l'invention peut être rendu antistatique grâce à l'incorporation, de préférence dans le revêtement interférentiel, d'au moins une couche électriquement conductrice. La nature et la localisation dans l'empilement de la couche électriquement conductrice pouvant être utilisée dans l'invention sont décrites plus en détail dans la demande WO 2013/098531. Il s'agit de préférence d'une couche de 1 à 20 nm d'épaisseur comprenant de préférence au moins un oxyde métallique choisi parmi l'oxyde d'étain-indium (In₂O₃:Sn, oxyde d'indium dopé à l'étain noté ITO), l'oxyde d'indium (In₂O₃), et l'oxyde d'étain (SnO₂).

Les différentes couches du revêtement interférentiel autres que celles décrites ci-dessus sont préférentiellement déposées par dépôt sous vide selon l'une des techniques suivantes : i) par évaporation, éventuellement assistée par faisceau ionique ; ii) par pulvérisation par faisceau d'ion ; iii) par pulvérisation cathodique ; iv) par dépôt chimique en phase vapeur assisté par plasma. Ces différentes techniques sont décrites dans les ouvrages "Thin Film Processes" and "Thin Film Processes II," Vossen & Kern, Ed., Academic Press, 1978 et 1991 respectivement. Une technique particulièrement recommandée est la technique d'évaporation sous vide. De préférence, le dépôt des couches organiques-inorganiques est effectué dans une enceinte à vide, comportant un canon à ions dirigé vers les substrats à revêtir, qui émet vers ceux-ci un faisceau d'ions positifs générés dans un plasma au sein du canon à ions. Préférentiellement les ions issus du canon à ions sont des particules constituées d'atomes de gaz dont on a extrait un ou plusieurs électron(s), et formés à partir d'un gaz rare, d'oxygène ou d'un mélange de deux ou plus de ces gaz.

Les couches organiques-inorganiques étant formées par dépôt sous vide, elles ne comprennent pas d'hydrolysat de composé organosilicié et se distinguent donc des revêtements sol-gel obtenus par voie liquide.

Des précurseurs, à savoir le composé B silico-organique et l'oxyde métallique (dans le cas de la couche B) ou le composé A silico-organique et les composés inorganiques optionnels (dans le cas de la couche A), sont introduits ou passent dans un état gazeux dans l'enceinte à vide. Ils sont de préférence amenés en direction du faisceau d'ions et sont activés et dissociés sous l'effet du canon à ions.

Sans vouloir être limités par une quelconque théorie, les inventeurs pensent que dans le cas de la couche B, le canon à ions induit une activation/dissociation du composé précurseur B et de l'oxyde métallique précurseur, ce qui formerait une couche organique-inorganique contenant des liaisons M-O-Si-CH_{x,} M désignant l'atome de métal de l'oxyde métallique, et qu'un processus similaire a lieu dans le cas de la couche A lorsque celle-ci est formée à partir d'un oxyde métallique. En l'absence d'oxyde métallique, la dissociation des composés précurseurs, notamment les composés silico-organiques, libère des radicaux organiques qui se déposent sur le substrat.

Cette technique de dépôt utilisant un canon à ions et un précurseur gazeux, parfois désignée par « ion beam deposition » est décrite notamment avec des seuls précurseurs organiques dans le brevet US 5508368. Elle permet de former des couches avec des contraintes mécaniques faibles.

Selon l'invention, de façon préférentielle, le seul endroit de l'enceinte où un plasma est généré est le canon à ions.

Les ions peuvent faire l'objet, le cas échéant, d'une neutralisation avant la sortie du canon à ions. Dans ce cas, le bombardement sera toujours considéré comme ionique. Le bombardement ionique provoque un réarrangement atomique et une densification dans la couche en cours de dépôt, ce qui permet de la tasser pendant qu'elle est en train d'être formée et présente l'avantage d'augmenter son indice de réfraction du fait de sa densification.

Lors de la mise en œuvre du procédé selon l'invention, la surface à traiter est préférentiellement bombardée par des ions, d'une densité de courant généralement comprise entre 20 et 1000 µA/cm², préférentiellement entre 30 et 500 µA/cm², mieux entre 30 et 200 µA/cm² sur la surface activée et généralement sous une pression résiduelle dans l'enceinte à vide pouvant varier de 6.10⁻⁵ mbar à 2.10⁻⁴ mbar, préférentiellement de 8.10⁻⁵ mbar à 2.10⁻⁴ mbar. On utilise de préférence un faisceau d'ions argon et/ou oxygène. Lorsqu'un mélange d'argon et d'oxygène est employé, le ratio molaire Ar / O₂ est de préférence ≤ 1, mieux ≤ 0,75 et encore mieux ≤ 0,5. Ce ratio peut être contrôlé en ajustant les débits de gaz dans le canon à ions. Le débit d'argon varie généralement de 0 à 30 sccm. De préférence, aucun gaz rare n'est utilisé. Le débit d'oxygène O₂ varie de préférence de 5 à 30 sccm, et est d'autant plus grand que le débit des composés précurseurs des couches A et B est élevé.

Les ions du faisceau d'ions, préférentiellement issus d'un canon à ions, utilisés au cours du dépôt de la couche A et/ou B ont de préférence une énergie allant de 5 à 1000 eV, mieux de 5 à 500 eV, préférentiellement de 75 à 150 eV, préférentiellement encore de 80 à 140 eV, mieux de 90 à 110 eV. Les espèces activées formées sont typiquement des radicaux ou des ions.

En cas de bombardement ionique lors du dépôt, il est possible d'effectuer un traitement par plasma concomitamment ou non au dépôt sous faisceau d'ions des couches A et/ou B. De préférence, le dépôt de ces couches est effectué sans l'assistance d'un plasma au niveau des substrats.

Le dépôt des couches A et/ou B, qui peut être réalisé selon des méthodes identiques ou différentes, s'effectue en présence d'une source d'oxygène lorsque le composé précurseur en question (A et/ou B) ne contient pas (ou pas suffisamment) d'atomes d'oxygène et que l'on souhaite que la couche correspondante contienne une certaine proportion d'oxygène. De même, le dépôt des couches A et/ou B s'effectue en présence d'une source d'azote lorsque le composé précurseur en question (A et/ou B) ne contient pas (ou pas suffisamment) d'atomes d'azote et que l'on souhaite que la couche correspondante contienne une certaine proportion d'azote. D'une manière générale, on préfère introduire du gaz oxygène avec le cas échéant une faible teneur en gaz azote, de préférence en l'absence de gaz azote.

Outre les couches organiques-inorganiques, d'autres couches du revêtement interférentiel peuvent être déposées sous bombardement ionique tel que décrit ci-dessus, c'est-à-dire en utilisant un bombardement au moyen d'un faisceau d'ions de la couche en cours de formation, émis de préférence par un canon à ions.

La méthode préférée pour la vaporisation des matériaux précurseurs des couches organiques-inorganiques, conduite sous vide, est le dépôt physique en phase vapeur, en particulier l'évaporation sous vide, généralement combinée à un chauffage des composés à évaporer. Elle peut être mise en jeu en utilisant des systèmes d'évaporation aussi divers qu'une source thermique à effet Joule (l'effet Joule est la manifestation thermique de la résistance électrique) ou un canon à électrons. Pour les précurseurs liquides ou solides, tout autre dispositif connu de l'homme du métier pouvant également être utilisé.

Les composés précurseurs organosiliciés A et B sont de préférence introduits dans l'enceinte à vide dans laquelle est réalisée la préparation des articles selon l'invention sous forme gazeuse, en contrôlant son débit. Ceci signifie qu'ils ne sont de préférence pas vaporisés à l'intérieur de l'enceinte à vide (contrairement aux oxydes métalliques précurseurs).

De préférence, les oxydes métalliques employés sont préchauffés de manière à se trouver dans un état fondu puis évaporé. Ils sont de préférence déposés par évaporation sous vide en utilisant un canon à électrons pour provoquer leur vaporisation.

Dans le cas de la couche B, le composé B précurseur et l'oxyde métallique précurseur sont de préférence déposés de façon concomitante (par exemple par co-évaporation) ou partiellement concomitante, c'est-à-dire avec chevauchement des étapes de dépôt de l'un et de l'autre précurseur. Dans ce dernier cas, le dépôt de l'un des deux précurseurs commence avant le dépôt de l'autre, le dépôt du second précurseur débutant avant la fin du dépôt du premier précurseur. Il en est de même pour la couche A lorsque celle-ci est formée à partir d'un composé inorganique.

Les composés A et B organosiliciés, précurseur respectifs des couches A et B, sont de nature organique et indépendants l'un de l'autre. Ils peuvent donc être identiques ou différents, et contiennent dans leur structure au moins un atome de silicium et au moins un atome de carbone. Ils comportent de préférence au moins une liaison Si-C, et comportent de préférence au moins un atome d'hydrogène. Selon un mode de réalisation, le composé A et/ou B comprend au moins un atome d'azote et/ou au moins un atome d'oxygène, de préférence au moins un atome d'oxygène.

La concentration de chaque élément chimique dans les couches A et B (métal M, Si, O, C, H, N...) peut être déterminée en utilisant la technique RBS (Rutherford Backscattering Spectrometry), ou ERDA (Elastic Recoil Detection Analysis).

Le pourcentage atomique en atomes de métal dans la couche B varie de préférence de 10 à 30 %. Le pourcentage atomique en atomes de carbone dans la couche B varie de préférence de 10 à 20 %. Le pourcentage atomique en atomes d'hydrogène dans la couche B varie de préférence de 10 à 30 %. Le pourcentage atomique en atomes de silicium dans la couche B varie de préférence de 10 à 20 %. Le pourcentage atomique en atomes d'oxygène dans la couche B varie de préférence de 20 à 40 %.

Le pourcentage atomique en atomes de métal dans la couche A varie de préférence de 0 à 15 %. Le pourcentage atomique en atomes de carbone dans la couche A varie de préférence de 10 à 25 %, mieux de 15 à 25 %. Le pourcentage atomique en atomes d'hydrogène dans la couche A varie de préférence de 10 à 40 %, mieux de 10 à 20 %. Le pourcentage atomique en atomes de silicium dans la couche A varie de préférence de 5 à 30 %, mieux de 15 à 25 %. Le pourcentage atomique en atomes d'oxygène dans la couche A varie de préférence de 20 à 60 %, mieux de 35 à 45 %.

Des exemples non limitatifs de composés organiques A et/ou B, cycliques ou non cycliques, sont les composés suivants : l'octaméthylcyclotétrasiloxane (OMCTS), le décaméthyl cyclopentasiloxane, le dodécaméthylcyclohexasiloxane, l'hexaméthyl cyclotrisiloxane, l'hexaméthyldisiloxane (HMDSO), l'octaméthyltrisiloxane, le décaméthyltétrasiloxane, le dodécaméthylpentasiloxane, le tétraéthoxysilane, le vinyltriméthylsilane, l'hexaméthyldisilazane, l'hexaméthyldisilane, l'hexaméthylcyclotrisilazane, le vinylméthyldiéthoxysilane, le divinyltétraméthyldisiloxane, le tétraméthyldisiloxane., le polydiméthylsiloxane (PDMS), le poly-phénylméthylsiloxane (PPMS) ou un tétraalkylsilane tel que le tétraméthylsilane.

De préférence, le composé organosilicié (A et/ou B) comporte au moins un atome de silicium porteur d'au moins un groupe alkyle, de préférence en C1-C4, mieux au moins un atome de silicium porteur d'un ou de deux groupes alkyle identiques ou différents, de préférence en C1-C4, par exemple le groupe méthyle.

Les composés A et/ou B précurseurs préférés comportent un groupe Si-O-Si, mieux, un groupe divalent de formule (3) : 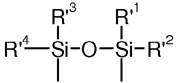 où R'¹ à R'⁴ désignent indépendamment des groupes alkyle ou vinyle linéaires ou ramifiés, de préférence en C1-C4, par exemple le groupe méthyle, des groupes aryle monocyclique ou polycyclique, hydroxyle ou des groupes hydrolysables. Des exemples non limitatifs de groupes hydrolysables sont les groupes H, halogène (chloro, bromo, iodo...), alcoxy, aryloxy, acyloxy, - NR¹R² où R¹ et R² désignent indépendamment un atome d'hydrogène, un groupe alkyle ou un groupe aryle, et -N(R³)-Si où R³ désigne un atome d'hydrogène, un groupe alkyle linéaire ou ramifié, de préférence en C1-C4 ou un groupe aryle, monocyclique ou polycyclique, de préférence monocyclique. Les groupes comportant un chaînon Si-O-Si ne sont pas considérés comme étant des "groupes hydrolysables" au sens de l'invention. Le groupe hydrolysable préféré est l'atome d'hydrogène.

Selon un autre mode de réalisation, le composé A et/ou B précurseur répond à la formule : 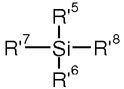 dans laquelle R'⁵ R'⁶, R'⁷, R'⁸ désignent indépendamment des groupes hydroxyle ou des groupes hydrolysables tels que des groupes OR, dans lesquels R est un groupe alkyle.

Selon un premier mode de réalisation, le composé A et/ou B comporte au moins un atome de silicium porteur de deux groupes alkyle identiques ou différents, de préférence en C1-C4. Selon ce premier mode de réalisation, le composé A et/ou B est de préférence un composé de formule (3) dans laquelle R'¹ à R'⁴ désignent indépendamment des groupes alkyle, de préférence en C1-C4, par exemple le groupe méthyle.

De préférence, le ou les atomes de silicium du composé A et/ou du composé B lorsqu'il est présent ne comportent aucun groupe hydrolysable ou groupe hydroxyle dans ce mode de réalisation.

Le ou les atomes de silicium du composé A et/ou B précurseur de la couche A et/ou B sont de préférence uniquement liés à des groupes alkyle et/ou des groupes comportant un chaînon -O-Si ou -NH-Si de façon à former un groupe Si-O-Si ou Si-NH-Si. Les composés précurseurs de la couche A et/ou B préférés sont le décaméthyltétrasiloxane, le HMDSO, l'OMCTS.

Il s'agit préférentiellement d'un polysiloxane cyclique de formule (4) : 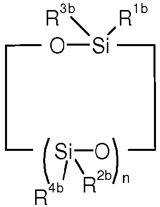 où n désigne un entier allant de 2 à 20, de préférence de 3 à 8, R^{1b} à R^{4b} représentent indépendamment des groupes alkyle linéaires ou ramifiés, de préférence en C1-C4 (par exemple le groupe méthyle), vinyle, aryle ou un groupe hydrolysable. Les membres préférés appartenant à ce groupe sont les octa-alkylcyclotétrasiloxanes (n = 3), de préférence l'octaméthylcyclotétrasiloxane (OMCTS). Dans certains cas, la couche A et/ou B est issue d'un mélange d'un certain nombre de composés de formule (4) où n peut varier dans les limites indiquées ci-dessus.

Selon un second mode de réalisation, le composé A et/ou B contient dans sa structure au moins un groupe Si-X', où X' est un groupe hydroxy ou un groupe hydrolysable, qui peut être choisi, sans limitation, parmi les groupes H, halogène, alcoxy, aryloxy, acyloxy, -NR¹R² où R¹ et R² désignent indépendamment un atome d'hydrogène, un groupe alkyle ou un groupe aryle, et - N(R³)-Si où R³ désigne un atome d'hydrogène, un groupe alkyle ou un groupe aryle.

Selon ce second mode de réalisation de l'invention, le composé A et/ou B contient de préférence dans sa structure au moins un groupe Si-H, c'est-à-dire constitue un hydrure de silicium. De préférence, l'atome de silicium du groupe Si-X' n'est pas lié à plus de deux groupes non hydrolysables tels que des groupes alkyle ou aryle.

Parmi les groupes X', les groupes acyloxy ont préférentiellement pour formule -OC(O)R⁴ où R⁴ est un groupe aryle préférentiellement en C6-C12, éventuellement substitué par un ou plusieurs groupes fonctionnels, ou alkyle préférentiellement en C1-C6, linéaire ou ramifié, éventuellement substitué par un ou plusieurs groupes fonctionnels et pouvant comporter en outre une ou plusieurs doubles liaisons, tel que les groupes phényle, méthyle ou éthyle, les groupes aryloxy et alcoxy ont pour formule -O-R⁵ où R⁵ est un groupe aryle préférentiellement en C6-C12, éventuellement substitué par un ou plusieurs groupes fonctionnels, ou alkyle préférentiellement en C1-C6, linéaire ou ramifié, éventuellement substitué par un ou plusieurs groupes fonctionnels et pouvant comporter en outre une ou plusieurs doubles liaisons, tel que les groupes phényle, méthyle ou éthyle, les halogènes sont préférentiellement F, CI, Br ou I, les groupes X' de formule -NR¹R² peuvent désigner un groupe amino NH₂, alkylamino, arylamino, dialkylamino, diarylamino, R¹ et R² désignant indépendamment un atome d'hydrogène, un groupe aryle préférentiellement en C6-C12, éventuellement substitué par un ou plusieurs groupes fonctionnels, ou un groupe alkyle préférentiellement en C1-C6, linéaire ou ramifié, éventuellement substitué par un ou plusieurs groupes fonctionnels et pouvant comporter en outre une ou plusieurs doubles liaisons, tel que les groupes phényle, méthyle ou éthyle, les groupes X' de formule -N(R³)-Si sont rattachés à l'atome de silicium par l'intermédiaire de leur atome d'azote et leur atome de silicium comporte naturellement trois autres substituants, où R³ désigne un atome d'hydrogène, un groupe aryle préférentiellement en C6-C12, éventuellement substitué par un ou plusieurs groupes fonctionnels, ou un groupe alkyle préférentiellement en C1-C6, linéaire ou ramifié, éventuellement substitué par un ou plusieurs groupes fonctionnels et pouvant comporter en outre une ou plusieurs doubles liaisons, tel que les groupes phényle, méthyle ou éthyle.

Le groupe acyloxy préféré est le groupe acétoxy. Le groupe aryloxy préféré est le groupe phénoxy. Le groupe halogène préféré est le groupe Cl. Les groupes alcoxy préférés sont les groupes méthoxy et éthoxy.

Dans le second mode de réalisation, le composé A et/ou B comporte de préférence au moins un atome de silicium porteur d'au moins un groupe alkyle, de préférence en C1-C4 linéaire ou ramifié, mieux au moins un atome de silicium porteur d'un ou de deux groupes alkyle identiques ou différents, de préférence en C1-C4, et d'un groupe X' (de préférence un atome d'hydrogène) directement lié à l'atome de silicium, X' ayant la signification indiquée précédemment. Le groupe alkyle préféré est le groupe méthyle. Le groupe vinyle peut également être utilisé à la place d'un groupe alkyle. De préférence, l'atome de silicium du groupe Si-X' est directement lié à au moins un atome de carbone.

De préférence, chaque atome de silicium du composé A et/ou B n'est pas lié directement à plus de deux groupes X', mieux n'est pas lié directement à plus d'un groupe X' (de préférence un atome d'hydrogène), mieux, chaque atome de silicium du composé A et/ou B est lié directement à un seul groupe X' (de préférence un atome d'hydrogène). De préférence, le composé A et/ou B comporte un ratio atomique Si/O égal à 1. De préférence, le composé A et/ou B comporte un ratio atomique C/Si <2, préférentiellement ≤ 1,8, mieux ≤ 1,6 et mieux encore ≤ 1,5, ≤ 1, 3 et de façon optimale égal à 1. De préférence encore, le composé A et/ou B comporte un ratio atomique C/O égal à 1. Selon un mode de réalisation, le composé A et/ou B ne comporte pas de groupe Si-N, mieux ne comporte pas d'atome d'azote.

Le ou les atomes de silicium du composé A et/ou B précurseur sont de préférence uniquement liés à des groupes alkyle, hydrogène et/ou des groupes comportant un chaînon -O-Si ou -NH-Si de façon à former un groupe Si-O-Si ou Si-NH-Si. Dans un mode de réalisation, le composé A et/ou B comporte au moins un groupe Si-O-Si-X' ou au moins un groupe Si-NH-SiX', X' ayant la signification indiquée précédemment et représentant de préférence un atome d'hydrogène.

Selon ce second mode de réalisation, le composé A et/ou B est de préférence un composé de formule (3) dans laquelle l'un au moins de R'¹ à R'⁴ désigne un groupe X' (de préférence un atome d'hydrogène), X' ayant la signification indiquée précédemment.

Selon ce second mode de réalisation, le composé A et/ou B est préférentiellement un polysiloxane cyclique de formule (5) : 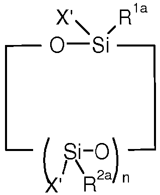 où X' a la signification indiquée précédemment et représente de préférence un atome d'hydrogène, n désigne un entier allant de 2 à 20, de préférence de 3 à 8, R^{1a} et R^{2a} représentent indépendamment un groupe alkyle de préférence en C1-C4 (par exemple le groupe méthyle), vinyle, aryle ou un groupe hydrolysable. Des exemples non limitatifs de groupes X' hydrolysables sont les groupes chloro, bromo, alcoxy, acyloxy, aryloxy, H. Les membres les plus courants appartenant à ce groupe sont les tétra-, penta- et hexa-alkylcyclotétrasiloxanes, de préférence les tétra-, penta- et hexa-méthylcyclotétrasiloxanes, le 2,4,6,8-tétraméthylcyclotétrasiloxane (TMCTS) étant le composé préféré. Dans certains cas, la couche A et/ou B est issue d'un mélange d'un certain nombre de composés ayant la formule ci-dessus où n peut varier dans les limites indiquées ci-dessus.

Selon un autre mode de réalisation, le composé A et/ou B est un alkylhydrosiloxane linéaire, mieux un méthylhydrosiloxane linéaire tel que par exemple le 1,1,1,3,5,7,7,7-octaméthyl tétrasiloxane, le 1,1,1,3,5,5,5-heptaméthyltrisiloxane, le 1,1,3,3,5,5-hexaméthyl trisiloxane.

Des exemples non-limitatifs de composés organiques A et/ou B précurseurs, cycliques ou non cycliques, conformes au second mode de réalisation, sont les composés suivants : le 2,4,6,8-tétraméthylcyclotétrasiloxane (TMCTS de formule (1)), le 2,4,6,8-tétraéthylcyclotétrasiloxane, le 2,4,6,8-tétraphénylcyclotétrasiloxane, le 2,4,6,8-tétraoctylcyclotétrasiloxane, le 2,2,4,6,6,8-hexaméthylcyclotétrasiloxane, le 2,4,6-triméthylcyclotrisiloxane, le cyclotétrasiloxane, le 1,3,5,7,9-pentaméthyl cyclopentasiloxane, le 2,4,6,8,10-hexaméthylcyclohexasiloxane, le 1,1,1,3,5,7,7,7-octaméthyl tétrasiloxane, le 1,1,3,3,5,5-hexaméthyltrisiloxane, le tétraméthyldisiloxane, le tétraéthoxysilane, le vinylméthyldiéthoxysilane, un hexaméthylcyclotrisilazane tel que le 3,4,5,6-hexaméthylcyclotrisilazane ou le 2,2,4,4,6,6-hexaméthylcyclotrisilazane, le 1,1,1,3,5,5,5-heptaméthyl trisiloxane, le tris(triméthylsiloxy)silane (de formule (2)), le 1,1,3,3-tétraméthyldisilazane, le 1,2,3,4,5,6,7,8-octaméthylcyclotétrasilazane, le nonaméthyl trisilazane, le tris(diméthylsilyl)amine, l'hexaméthyldisilazane.

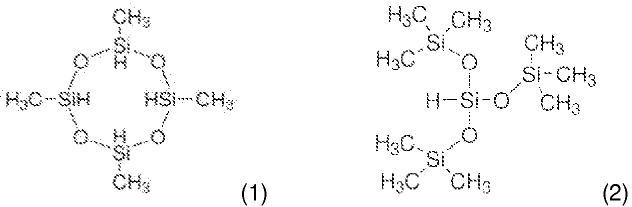

L'utilisation d'au moins un composé organosilicié B pour former la couche B, qui comporte de préférence des liaisons Si-C et éventuellement Si-O, permet de bénéficier de propriétés thermomécaniques améliorées par rapport aux matériaux de haut indice de réfraction traditionnels tels que TiO₂ ou ZrO₂, notamment la tenue à la température et la résistance à la rayure des substrats revêtus par les couches B selon l'invention, pour lesquelles on atteint des niveaux jusque-là inaccessibles par les technologies traditionnelles telles que le dépôt de couches purement inorganiques sous assistance ionique, tout en maintenant un indice de réfraction et une transparence élevés.

Selon un mode de réalisation de l'invention, la couche B comprend plus de 80 % en masse de composés issus du composé B et de l'oxyde métallique selon l'invention, par rapport à la masse totale de la couche B, de préférence plus de 90 %. Selon un mode de réalisation, la couche B est exclusivement formée par dépôt sous vide et sous bombardement ionique d'au moins un oxyde métallique et d'au moins un composé B organosilicié, à l'exclusion de tout autre précurseur.

De préférence, la couche B contient de 5 à 90 % en masse d'oxydes métalliques par rapport à la masse de la couche B. De préférence encore, la couche B contient de 5 à 70 % en masse de composés B organosiliciés par rapport à la masse de la couche B.

Les composés inorganiques précurseurs de la couche A (généralement des oxydes métalliques), lorsqu'ils sont présents, le sont dans une proportion telle que la couche A contient de préférence moins de 30 % en masse de composés inorganiques par rapport à la masse de la couche A, de préférence moins de 20 %, de préférence encore moins de 10 %, mieux moins de 5 %. Selon un mode de réalisation préféré, la couche de nature organique-inorganique (qui est de préférence une couche A) n'est pas formée à partir de composés précurseurs inorganiques (minéraux) tels que des oxydes minéraux et ne contient donc pas de composés inorganiques tels que des oxydes métalliques. Les composés organosiliciés ne sont pas considérés dans la présente demande comme des composés inorganiques visés par cette exclusion. Dans ce cas, la couche A est une couche qui contient de préférence uniquement des composés organosiliciés. De préférence, la teneur en composés inorganiques ou oxydes métalliques dans la couche A est inférieure à 10 % en masse par rapport à la masse de la couche A, mieux inférieure à 5 % et encore mieux inférieure à 1 %.

De préférence, la couche A contient plus de 70 % en masse de composés A organosiliciés par rapport à la masse de la couche A, mieux plus de 80 %, encore mieux plus de 90 % et idéalement 100 %.

La couche organique-inorganique possède de préférence une épaisseur allant de 20 à 500 nm, de préférence encore de 25 à 250 nm, mieux de 30 à 200 nm. Dans un mode de réalisation préféré, le revêtement interférentiel contient au moins une couche organique-inorganique ayant une épaisseur supérieure ou égale à 250 nm, mieux supérieure ou égale 300 nm.

Dans un autre mode de réalisation, la somme des épaisseurs des couches organiques-inorganiques du revêtement interférentiel est supérieure ou égale à 250 nm, mieux supérieure ou égale 300 nm et encore mieux supérieure ou égale à 500 nm.

Lorsqu'elle constitue la couche externe du revêtement interférentiel, la couche organique-inorganique a préférentiellement une épaisseur allant de 60 à 200 nm. La durée du processus de dépôt, les débits et pressions sont ajustés de façon à obtenir les épaisseurs de revêtements désirées.

La nature des composés précurseurs employés, leurs quantités respectives (qui peuvent être modulées en ajustant les débits évaporés), les conditions de dépôt, notamment la durée du dépôt, sont des exemples de paramètres que l'homme du métier saura faire varier pour parvenir au revêtement interférentiel comprenant au moins une couche organique-inorganique présentant l'ensemble des propriétés souhaitées.

Parmi ses propriétés avantageuses, l'article selon l'invention possède une résistance accrue à la courbure et au craquèlement du revêtement interférentiel. Ceci découle de la nature de la couche organique-inorganique de l'invention, qui possède un allongement à la rupture supérieur à celui des couches inorganiques, et peut subir des déformations sans se fissurer. La résistance à la courbure de l'article selon l'invention peut être évaluée au moyen du test de résistance à la courbure décrit dans la demande WO 2013/098531. Le mode de sollicitation de ce test est représentatif de la sollicitation chez l'opticien pour le montage du verre, c'est-à-dire la "compression" du verre pour l'insérer dans une monture métallique. Le résultat du test est la déformation critique D en mm que peut subir le verre avant l'apparition de fissures. Plus la valeur de la déformation est élevée, meilleure est la résistance à la déformation mécanique appliquée. D'une manière générale, les revêtements interférentiels selon l'invention ont des valeurs de déformation critique variant de 0,5 à 1,9 mm, mieux de 0,5 mm à 1,4 mm et encore mieux de 0,5 à 1 mm.

La température critique d'un article revêtu selon l'invention est de préférence supérieure ou égale à 60°C, mieux supérieure ou égale à 70°C,encore mieux supérieure ou égale à 80°C et idéalement supérieure ou égale à 90°C. Dans la présente demande, la température critique d'un article ou d'un revêtement est définie comme étant celle à partir de laquelle on observe l'apparition de craquelures dans l'empilement présent à la surface du substrat, ce qui traduit une dégradation du revêtement. Cette température critique élevée est due à la présence de la couche organique-inorganique à la surface de l'article. Par ailleurs, cette couche possède une aptitude plus faible à se charger en eau que des couches inorganiques évaporées, et une excellente stabilité dans le temps de ses propriétés optiques.

Grâce à ses propriétés thermomécaniques améliorées par rapport aux couches minérales, la couche organique-inorganique selon l'invention peut notamment être appliquée sur une seule face d'une lentille semi-finie, généralement sa face avant, l'autre face de cette lentille devant encore être usinée et traitée. L'empilement présent sur la face avant de la lentille ne sera pas dégradé par l'accroissement de température générée par les traitements que subira la face arrière lors du durcissement des revêtements qui auront été déposés sur cette face arrière ou toute autre action susceptible d'augmenter la température de la lentille.

De préférence, le facteur moyen de réflexion dans le domaine visible (400-700 nm) d'un article revêtu d'un revêtement interférentiel selon l'invention, noté Rₘ, est inférieur à 2,5 % par face, mieux inférieur à 2 % par face et encore mieux inférieur à 1 % par face de l'article. Dans un mode de réalisation optimal, l'article comprend un substrat dont les deux surfaces principales sont revêtues d'un revêtement interférentiel selon l'invention et présente une valeur de Rₘ totale (cumul de réflexion due aux deux faces) inférieure à 1%. Les moyens pour parvenir à de telles valeurs de Rₘ sont connus de l'homme du métier.

Dans la présente demande, le "facteur moyen de réflexion" Rₘ (moyenne de la réflexion spectrale sur l'ensemble du spectre visible entre 400 et 700 nm) est tel que défini dans la norme ISO 13666:1998, et mesuré conformément à la norme ISO 8980-4.

Dans certaines applications, il est préférable que la surface principale du substrat soit revêtue d'un ou plusieurs revêtements fonctionnels préalablement au dépôt du revêtement interférentiel. Ces revêtements fonctionnels classiquement utilisés en optique peuvent être, sans limitation, une couche de primaire améliorant la résistance au choc et/ou l'adhésion des couches ultérieures dans le produit final, un revêtement anti-abrasion et/ou anti-rayure, un revêtement polarisé, un revêtement photochrome, électrochrome ou un revêtement coloré, en particulier une couche de primaire revêtue d'un revêtement anti-abrasion et/ou anti-rayure. Ces deux derniers revêtements sont décrits plus en détail dans les demandes WO 2008/015364 et WO 2010/109154.

L'article selon l'invention peut également comporter des revêtements formés sur le revêtement interférentiel, capables de modifier ses propriétés de surface, tels qu'un revêtement hydrophobe et/ou oléophobe (top coat antisalissure) ou un revêtement antibuée. Ces revêtements sont de préférence déposés sur la couche externe du revêtement interférentiel. Leur épaisseur est en général inférieure ou égale à 10 nm, de préférence de 1 à 10 nm, mieux de 1 à 5 nm. Ils sont respectivement décrits dans les demandes WO 2009/047426 et WO 2011/080472.

Typiquement, un article selon l'invention comprend un substrat successivement revêtu d'une couche de primaire d'adhésion et/ou antichoc, d'un revêtement anti-abrasion et/ou anti-rayure, du revêtement interférentiel multicouche comprenant au moins une couche organique-inorganique, et d'un revêtement hydrophobe et/ou oléophobe.

L'invention concerne également un procédé de fabrication d'un article tel que défini ci-dessus, comprenant au moins les étapes suivantes :
- fournir un article comprenant un substrat ayant au moins une surface principale,
- déposer sur ladite surface principale du substrat un revêtement interférentiel multicouche comprenant au moins une couche ayant un indice de réfraction supérieur à 1,65 et au moins une couche ayant un indice de réfraction inférieur ou égal à 1,65, l'une au moins des couches du revêtement interférentiel étant une couche de nature organique-inorganique ayant été déposée sous vide et présentant une épaisseur supérieure ou égale à 30 nm, ledit revêtement interférentiel présentant une épaisseur supérieure ou égale à 450 nm et/ou un nombre de couches supérieur ou égal à 8,
- récupérer un article comprenant un substrat ayant une surface principale revêtue dudit revêtement interférentiel.

L'invention est illustrée, de façon non limitative, par les exemples suivants.

### EXEMPLES

### 1. Procédures générales

Les articles employés dans les exemples comprennent un substrat de lentille ORMA^{®} ESSILOR de 65 mm de diamètre, de puissance -2,00 dioptries et d'épaisseur centre 1,2 mm, revêtu sur sa face concave du revêtement de primaire antichoc et du revêtement anti-abrasion et anti-rayures (hard coat) divulgués dans la partie expérimentale de la demande WO 2010/109154, et un revêtement interférentiel antireflet comprenant une couche A selon l'invention.

Le bâti de dépôt sous vide est une machine Leybold LAB1100+ équipée d'un canon à électrons pour l'évaporation des matériaux précurseurs, d'un évaporateur thermique, d'un canon à ions KRI EH 1000 F (de la société Kaufman & Robinson Inc.) pour la phase préliminaire de préparation de la surface du substrat par des ions argon (IPC), ainsi que pour le dépôt des couches sous bombardement ionique (IAD), et d'un système d'introduction de liquide, utilisé lorsque le composé organosilicié précurseur notamment de la couche A est un liquide dans les conditions normales de température et de pression (cas du décaméthyltétrasiloxane). Ce système comprend un réservoir contenant le composé précurseur liquide de la couche en question, des résistances pour chauffer le réservoir et les tubes reliant le réservoir de précurseur liquide à la machine de dépôt sous vide, un débitmètre pour la vapeur de la société MKS (MKS1150C), porté à une température de 30-120°Clors de son utilisation, selon le débit de décaméthyltétrasiloxane vaporisé, qui varie de préférence de 0,01 à 0,8 g/min (1 à 50 sccm) (la température est de 120°C pour un débit de 0,3 g'min (20 sccm) de décaméthyltétrasiloxane).

La vapeur de décaméthyltétrasiloxane sort d'un tuyau en cuivre à l'intérieur de la machine, à une distance d'environ 30 cm du canon à ions. Des débits d'oxygène et éventuellement d'argon sont introduits à l'intérieur du canon à ions. Préférentiellement, il n'est pas introduit d'argon ni aucun autre gaz rare à l'intérieur du canon à ions.

Les couches A selon l'invention sont formées par évaporation sous vide assistée par faisceau d'ions oxygène et éventuellement argon pendant le dépôt (source d'évaporation : canon à électrons) de décaméthyltétrasiloxane, fourni par la société Sigma-Aldrich.

Sauf indication contraire, les épaisseurs mentionnées dans la présente demande sont des épaisseurs physiques. Plusieurs échantillons de chaque verre ont été préparés.

### 2. Modes opératoires

Le procédé de préparation des articles d'optique selon l'invention comprend l'introduction du substrat revêtu du revêtement de primaire et du revêtement anti-abrasion définis ci-dessus dans l'enceinte de dépôt sous vide, le préchauffage du réservoir, des tuyaux et du débitmètre à vapeur à la température choisie (~ 15 min), une étape de pompage primaire, puis de pompage secondaire pendant 400 s permettant l'obtention d'un vide secondaire (~2. 10⁻⁵ mbar, pression lue sur une jauge Bayard-Alpert), une étape d'activation de la surface du substrat par un faisceau d'ions argon (IPC : 1 minute, 100 V, 1 A, le canon à ions restant en fonctionnement à la fin de cette étape), puis le dépôt par évaporation d'un revêtement antireflet comprenant au moins une couche A.

Dépôt d'une couche A selon l'invention : Le canon à ions ayant été démarré avec de l'argon, de l'oxygène est ajouté dans le canon à ions avec un débit programmé, le courant d'anode souhaité est programmé (3 A) et le débit d'argon est éventuellement arrêté, selon les conditions de dépôt souhaitées. D'une manière générale, le procédé selon l'invention est effectué avec de l'oxygène (débit d'O₂ dans le canon à ions au niveau de la source ionique : 20 sccm), en l'absence de gaz rare (pas de débit d'argon au niveau de la source ionique). Le décaméthyltétrasiloxane est introduit dans l'enceinte de dépôt sous forme gazeuse (débit d'injection : 20 sccm). L'alimentation en ce composé est arrêtée une fois l'épaisseur souhaitée obtenue, puis le canon à ions est éteint.

Le dépôt des autres couches d'oxydes métalliques (ne contenant aucun composé organosilicié) a été effectué de façon classique par évaporation sous vide de l'oxyde métallique adéquat (oxyde de zirconium, SiO₂...), sans assistance ionique.

L'épaisseur des couches déposées a été contrôlée en temps réel au moyen d'une microbalance à quartz, en modifiant si besoin la vitesse de dépôt en ajustant le courant du canon à électrons. Une fois l'épaisseur souhaitée obtenue, le ou les obturateurs ont été fermés, le ou les canons à ions et électrons arrêtés, et les débits de gaz (oxygène, éventuellement argon et vapeurs de décaméthyltétrasiloxane) ont été arrêtés.

Une étape de ventilation finale a été réalisée une fois le dépôt de l'empilement achevé.

Plusieurs exemples comparatifs ont été réalisés, en remplaçant la ou les couches A selon l'invention par des couches de SiO₂. Ainsi, l'empilement de l'exemple comparatif 1 diffère de celui des exemples 1 à 3 par la suppression des composés organosiliciés dans les couches du revêtement antireflet et leur remplacement par de la silice, et l'empilement de l'exemple comparatif 4 diffère de celui de l'exemple 4 par la suppression des composés organosiliciés dans les couches du revêtement antireflet et leur remplacement par de la silice.

Les articles des exemples 1-4 et des exemples comparatifs sont des filtres optiques sélectifs de lumière bleue. Le revêtement interférentiel utilisé dans les exemples 1-3 et l'exemple comparatif 1 est un empilement de forte épaisseur (1210,5 nm) comprenant 5 couches ayant une épaisseur élevée (> 100 nm). Le revêtement interférentiel utilisé dans l'exemple 4 et l'exemple comparatif 4 est un empilement de plus faible épaisseur (510 nm) comprenant un nombre de couches élevé (8).

### 3. Caractérisations

La température critique de l'article est mesurée 24 heures et/ou une semaine après sa préparation, de la façon indiquée dans la demande WO 2008/001011.

Sauf indication contraire, les indices de réfraction auxquels il est fait référence dans la présente invention sont exprimés pour une longueur d'onde de 632,8 nm et ont été mesurés par ellipsométrie à une température de 20-25°C.

Le test de résistance à la courbure, décrit dans la demande WO 2013/098531, permet d'évaluer la capacité d'un article possédant une courbure à subir une déformation mécanique. Le résultat du test, réalisé un mois après la préparation des verres, est la déformation critique D en mm que peut subir le verre avant l'apparition de fissures. Plus la valeur de la déformation est élevée, meilleure est la résistance à la déformation mécanique appliquée.

Les propriétés d'adhésion de l'ensemble du revêtement interférentiel au substrat ont été vérifiées sur la face convexe de la lentille au moyen du test communément appelé "n×10 coups", en suivant la procédure décrite dans les demandes internationales WO 2010/109154 et WO 99/49097 en utilisant un nombre de sollicitations égal à 13. L'appréciation consiste à relever le nombre de sollicitations que peut supporter une lentille avant l'apparition d'un défaut. Par conséquent, plus la valeur obtenue au test n×10 coups est élevée, meilleure est l'adhésion du revêtement interférentiel au substrat.

La résistance à l'abrasion de l'article a été évaluée par détermination des valeurs BAYER ASTM (Bayer sable) sur les substrats revêtus du revêtement antireflet selon les méthodes décrites dans la demande WO 2008/001011 (norme ASTM F 735.81). Plus la valeur obtenue au test BAYER est élevée, plus la résistance à l'abrasion est élevée. Ainsi, la valeur de Bayer ASTM (Bayer sable) est qualifiée de bonne lorsqu'elle est supérieure ou égale à 3,4 et inférieure à 4,5 et d'excellente pour des valeurs de 4,5 et plus.

La dureté, ou résistance à la rayure, a été évaluée grâce au test dit de la paille de fer (pdf manuel, ou test à la laine d'acier), tel que décrit dans la demande WO 2008/062142. Plus la note obtenue est élevé (note allant de 1 à 5), plus la résistance à la rayure du verre est faible.

### 4. Résultats

Les tableaux ci-dessous présentent les performances optiques et mécaniques de différents articles selon l'invention ou articles comparatifs ainsi que les conditions de dépôt des différentes couches.

| Exemple 1 | |
|---|---|
| | |

| Substrat + primaire + hard coat | |
|---|---|
| ZrO₂ | 13,5 nm |
| Couche A * | 404 nm |
| SiO₂ | 8 nm |
| ZrO₂ | 153 nm |
| SiO₂ | 235 nm |
| ZrO₂ | 277 nm |
| SiO₂ | 120 nm |

| Exemple comparatif C1 | |
|---|---|
| | |

| Substrat + primaire + hard coat | |
|---|---|
| ZrO₂ | 13,5 nm |
| SiO₂ | 412 nm |
| ZrO₂ | 153 nm |
| SiO₂ | 235 nm |
| ZrO₂ | 277 nm |
| SiO₂ | 120 nm |

| Exemple 3 | |
|---|---|
| | |

| Substrat + primaire + hard coat | |
|---|---|
| ZrO₂ | 13,5 nm |
| Couche A * | 404 nm |
| SiO₂ | 8 nm |
| ZrO₂ | 153 nm |
| SiO₂ | 235 nm |
| ZrO₂ | 277 nm |
| Couche A * | 120 nm |

| Exemple 2 | |
|---|---|
| | |

| Substrat + primaire + hard coat | |
|---|---|
| ZrO₂ | 13,5 nm |
| SiO₂ | 412 nm |
| ZrO₂ | 153 nm |
| SiO₂ | 235 nm |
| ZrO₂ | 277 nm |
| Couche A * | 120 nm |

| Exemple 4 | |
|---|---|
| | |

| Substrat + primaire + hard coat | |
|---|---|
| ZrO₂ | 47 |
| SiO₂ | 50 |
| ZrO₂ | 54 |
| SiO₂ | 69 |
| ZrO₂ | 44 |
| SiO₂ | 61 |
| ZrO₂ | 53 |
| Couche A * | 132 |

| Exemple comparatif C4 | |
|---|---|
| | |

| Substrat + primaire + hard coat | |
|---|---|
| ZrO₂ | 47 |
| SiO₂ | 50 |
| ZrO₂ | 54 |
| SiO₂ | 69 |
| ZrO₂ | 44 |
| SiO₂ | 61 |
| ZrO₂ | 53 |
| SiO₂ | 132 |

Couche A : Décaméthyltétrasiloxane. * Dépôt sous assistance ionique.

| Exemple | Test Bayer ASTM | Test nx10 coups | Test paille de fer | T critique [°C] à t+24h | T critique [°C] à t+ 1 semaine | Résistance à la courbure, déformation en mm avant craquelure |
|---|---|---|---|---|---|---|
| 1 | 6,8 | 13 | 3 | 60 | 60 | 0,66 |
| C1 | 6,8 | 13 | 3 | 60 | 50 | 0,32 |
| 2 | 10,0 | 13 | 3 | 70 | 70 | 0.36 |
| 3 | 9,0 | 13 | 1-3 | 70 | 60 | 0,63 |
| 4 | 3,2-5,5 | 13 | 3 | 70-80 | 50-70 | 0,65 |
| C4 | 1,6 | 13 | 3 | 70 | 50 | 0,44 |

Les articles des exemples 1 à 4 ne présentent aucune craquelure à la fin de leur préparation et ont révélé de bonnes performances lors des différents tests de durabilité réalisés. Ils présentent des températures critiques supérieures de 10 à 20°C et des résistances à la courbure 1,5 à 2 fois plus élevées, par rapport aux articles des exemples comparatifs dont les couches antireflet ne contiennent aucun composé organosilicié.

Le meilleur compromis au niveau des performances de résistance à la courbure, à l'abrasion et de température critique ont été obtenus pour l'exemple 3.

La résistance à l'abrasion des articles des exemples 2 et 3 est remarquablement élevée.

## Revendications

1. Article comprenant un substrat ayant au moins une surface principale revêtue d'un revêtement interférentiel multicouche comprenant au moins une couche ayant un indice de réfraction supérieur à 1,65 et au moins une couche ayant un indice de réfraction inférieur ou égal à 1,65, l'une au moins des couches du revêtement interférentiel étant une couche de nature organique-inorganique ayant été obtenue par dépôt sous vide d'au moins un composé organosilicié et présentant une épaisseur supérieure ou égale à 30 nm, ladite couche de nature organique-inorganique possédant un indice de réfraction inférieur ou égal à 1,65 et comprenant plus de 80 % en masse de composés organosiliciés par rapport à la masse de ladite couche, ledit revêtement interférentiel présentant:
- un nombre de couches supérieur ou égal à 8, et/ou
- une épaisseur supérieure ou égale à 450 nm.

2. Article selon la revendication 1, **caractérisé en ce que** la couche de nature organique-inorganique comprend des atomes de carbone, d'oxygène et d'un métal ou métalloïde.

3. Article selon l'une quelconque des revendications précédentes, **caractérisé en ce que** le dépôt de la couche de nature organique-inorganique est réalisé sous l'assistance d'une source d'ions, de préférence sous bombardement ionique effectué au moyen d'un canon à ions.

4. Article selon l'une quelconque des revendications précédentes, **caractérisé en ce que** le composé organosilicié comporte au moins un groupe divalent de formule : 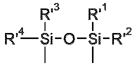 où R'¹ à R'⁴ désignent indépendamment des groupes alkyle, vinyle, aryle, hydroxyle ou des groupes hydrolysables, ou **en ce que** le composé organosilicié répond à la formule : 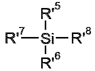 dans laquelle R'⁵, R'⁶, R'⁷, R'⁸ désignent indépendamment des groupes hydroxyle ou des groupes hydrolysables tels que des groupes OR, dans lesquels R est un groupe alkyle.

5. Article selon l'une quelconque des revendications précédentes, **caractérisé en ce que** le composé organosilicié est choisi parmi l'octaméthylcyclotétrasiloxane, le 2,4,6,8-tétraméthylcyclotétrasiloxane, le décaméthyltétrasiloxane, le décaméthyl cyclopentasiloxane, le dodécaméthylpentasiloxane, et l'hexaméthyldisiloxane.

6. Article selon l'une quelconque des revendications précédentes, **caractérisé en ce que** ladite couche de nature organique-inorganique n'est pas formée à partir de composés précurseurs inorganiques.

7. Article selon l'une quelconque des revendications précédentes, **caractérisé en ce que** la couche de nature organique-inorganique présente un indice de réfraction inférieur ou égal à 1,55.

8. Article selon l'une quelconque des revendications précédentes, **caractérisé en ce que** le revêtement interférentiel présente une épaisseur supérieure ou égale à 450 nm et un nombre de couches supérieur ou égal à 8.

9. Article selon l'une quelconque des revendications précédentes, **caractérisé en ce que** le revêtement interférentiel présente une épaisseur supérieure ou égale à 1 µm de préférence supérieure ou égale à 1,1 µm.

10. Article selon l'une quelconque des revendications précédentes, **caractérisé en ce qu'**il comprend une couche de nature organique-inorganique d'épaisseur supérieure ou égale à 300 nm.

11. Article selon l'une quelconque des revendications précédentes, **caractérisé en ce que** le revêtement interférentiel comprend une sous-couche comprenant une couche de nature organique-inorganique.

12. Article selon l'une quelconque des revendications précédentes, **caractérisé en ce que** le revêtement interférentiel est un filtre optique sélectif et/ou un revêtement antireflet, de préférence un filtre optique sélectif comportant une zone de filtration dans le domaine du bleu (400-500 nm).

13. Article selon l'une quelconque des revendications précédentes, **caractérisé en ce qu'**il présente une température critique supérieure ou égale à 60°C.

## Patentansprüche

1. Artikel, der ein Substrat mit mindestens einer Hauptfläche aufweist, die mit einer mehrschichtigen Interferenzbeschichtung beschichtet ist, die mindestens eine Schicht mit einem Brechungsindex größer 1,65 und mindestens eine Schicht mit einem Brechungsindex kleiner als oder gleich 1,65 aufweist, wobei es sich bei mindestens einer der Schichten der Interferenzbeschichtung um eine organisch-anorganische Schicht handelt, die durch eine Vakuumabscheidung mindestens einer siliciumorganischen Verbindung erhalten wurde und eine Dicke größer als oder gleich 30 nm aufweist, die organisch-anorganische Schicht einen Brechungsindex kleiner als oder gleich 1,65 aufweist und mehr als 80 Masse-% siliciumorganische Verbindungen, bezogen auf die Masse der Schicht, umfasst, wobei die Interferenzbeschichtung Folgendes aufweist:
- eine Anzahl von Schichten größer als oder gleich 8 und/oder
- eine Dicke größer als oder gleich 450 nm.

2. Artikel nach Anspruch 1, **dadurch gekennzeichnet, dass** die organisch-anorganische Schicht Atome von Kohlenstoff, Sauerstoff und einem Metall oder Halbmetall umfasst.

3. Artikel nach einem der vorhergehenden Ansprüche, **dadurch gekennzeichnet, dass** die Abscheidung der organisch-anorganischen Schicht unterstützt durch eine Ionenquelle, vorzugsweise durch einen mittels einer Ionenkanone erfolgenden Ionenbeschuss, erfolgt.

4. Artikel nach einem der vorhergehenden Ansprüche, **dadurch gekennzeichnet, dass** die siliciumorganische Verbindung mindestens eine zweiwertige Gruppe der Formel: 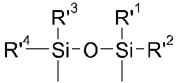 umfasst, wobei R'¹ bis R'⁴ unabhängig Alkyl-, Vinyl-, Aryl-, Hydroxylgruppen oder hydrolysierbare Gruppen bezeichnen, oder dadurch, dass die siliciumorganische Verbindung der Formel: 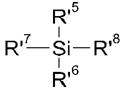 entspricht, in der R'⁵, R'⁶, R'⁷, R'⁸ unabhängig Hydroxylgruppen oder hydrolysierbare Gruppen, wie OR-Gruppen, bezeichnen, in denen R eine Alkylgruppe ist.

5. Artikel nach einem der vorhergehenden Ansprüche, **dadurch gekennzeichnet, dass** die siliciumorganische Verbindung aus Octamethylcyclotetrasiloxan, 2,4,6,8-Tetramethylcyclotetrasiloxan, Decamethyltetrasiloxan, Decamethylcyclopentasiloxan, Dodecamethylpentasiloxan und Hexamethyldisiloxan ausgewählt ist.

6. Artikel nach einem der vorhergehenden Ansprüche, **dadurch gekennzeichnet, dass** die organisch-anorganische Schicht nicht aus anorganischen Vorläuferverbindungen gebildet ist.

7. Artikel nach einem der vorhergehenden Ansprüche, **dadurch gekennzeichnet, dass** die organisch-anorganische Schicht einen Brechungsindex kleiner als oder gleich 1,55 aufweist.

8. Artikel nach einem der vorhergehenden Ansprüche, **dadurch gekennzeichnet, dass** die Interferenzbeschichtung eine Dicke größer als oder gleich 450 nm und eine Anzahl von Schichten größer als oder gleich 8 aufweist.

9. Artikel nach einem der vorhergehenden Ansprüche, **dadurch gekennzeichnet, dass** die Interferenzbeschichtung eine Dicke größer als oder gleich 1 µm, vorzugsweise größer als oder gleich 1,1 µm, aufweist.

10. Artikel nach einem der vorhergehenden Ansprüche, **dadurch gekennzeichnet, dass** er eine organisch-anorganische Schicht mit einer Dicke größer als oder gleich 300 nm aufweist.

11. Artikel nach einem der vorhergehenden Ansprüche, **dadurch gekennzeichnet, dass** die Interferenzbeschichtung eine Unterschicht umfasst, die eine organisch-anorganische Schicht umfasst.

12. Artikel nach einem der vorhergehenden Ansprüche, **dadurch gekennzeichnet, dass** es sich bei der Interferenzbeschichtung um einen selektiven optischen Filter und/oder eine reflexmindernde Beschichtung, vorzugsweise einen selektiven optischen Filter mit einer Filterzone im blauen Bereich (400 - 500 nm), handelt.

13. Artikel nach einem der vorhergehenden Ansprüche, **dadurch gekennzeichnet, dass** er eine kritische Temperatur größer als oder gleich 60 °C aufweist.

## Claims

1. An article comprising a substrate having at least one main surface coated with a multilayer interference coating comprising at least one layer having a refractive index higher than 1.65 and at least one layer having a refractive index lower than or equal to 1.65, at least one of the layers of the interference coating being a layer of organic-inorganic nature that was obtained by vacuum deposition of at least one organosilicon compound and that has a thickness higher than or equal to 30 nm, said layer of organic-inorganic nature having a refractive index lower than or equal to 1.65 and comprising more than 80 % by weight of organosilicon compounds as compared to the weight of said layer, said interference coating having:
- a number of layers higher than or equal to 8, and/or
- a thickness higher than or equal to 450 nm.

2. The article as claimed in claim 1, **characterized in that** the layer of organic-inorganic nature comprises atoms of carbon, of oxygen and of a metal or metalloid.

3. The article as claimed in any one of the preceding claims, **characterized in that** the layer of organic-inorganic nature is deposited under the assistance of a source of ions and preferably under ion bombardment achieved by means of an ion gun.

4. The article as claimed in any one of the preceding claims, **characterized in that** the organosilicon compound comprises at least one divalent group of formula: 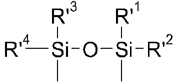 where R'¹ to R'⁴ independently denote alkyl, vinyl, aryl or hydroxyl groups or hydrolysable groups, or **in that** the organosilicon compound corresponds to the formula: 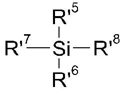 in which R'⁵, R'⁶, R'⁷ and R'⁸ independently denote hydroxyl groups or hydrolysable groups, such as OR groups, in which R is an alkyl group.

5. The article as claimed in any one of the preceding claims, **characterized in that** the organosilicon compound is chosen from octamethylcyclotetrasiloxane, 2,4,6,8-tetramethylcyclotetrasiloxane, decamethyltetrasiloxane, decamethyl cyclopentasiloxane, dodecamethylpentasiloxane, and hexamethyldisiloxane.

6. The article as claimed in any one of the preceding claims, **characterized in that** said layer of organic-inorganic nature is not formed from inorganic precursor compounds.

7. The article as claimed in any one of the preceding claims, **characterized in that** the layer of organic-inorganic nature has a refractive index lower than or equal to 1.55.

8. The article as claimed in any one of the preceding claims, **characterized in that** the interference coating has a thickness higher than or equal to 450 nm and a number of layers higher than or equal to 8.

9. The article as claimed in any one of the preceding claims, **characterized in that** the interference coating has a thickness higher than or equal to 1 µm, preferably higher than or equal to 1.1 µm.

10. The article as claimed in any one of the preceding claims, **characterized in that** it comprises a layer of organic-inorganic nature of thickness higher than or equal to 300 nm.

11. The article as claimed in any one of the preceding claims, **characterized in that** the interference coating comprises an underlayer comprising a layer of organic-inorganic nature.

12. The article as claimed in any one of the preceding claims, **characterized in that** the interference coating is a selective optical filter and/or an antireflection coating, preferably a selective optical filter including a filtering zone in the domain of the blue (400-500 nm).

13. The article as claimed in any one of the preceding claims, **characterized in that** it has a critical temperature higher than or equal to 60°C.
